# FASCICULE DE BREVET EUROPEEN

(11) **EP 4 351 927 B1**
(45) Date de publication et mention de la délivrance du brevet: **26.02.2025**
(21) Numéro de dépôt: 22721420.2
(22) Date de dépôt: 08.04.2022
(51) Int. Cl.: B60R 11/00

(54) **SUPPORT DESTINÉ À LA FIXATION D'UN MODULE TÉLÉMATIQUE À UN ÉLÉMENT DE STRUCTURE INTERNE D'UN VÉHICULE AUTOMOBILE, SYSTÈME TÉLÉMATIQUE ET VÉHICULE COMPRENANT UN TEL SUPPORT**
HALTERUNG ZUR BEFESTIGUNG EINES TELEMATIKMODULS AN EINEM INTERNEN STRUKTURELEMENT EINES KRAFTFAHRZEUGS, TELEMATIKSYSTEM UND FAHRZEUG MIT SOLCH EINER HALTERUNG
BRACKET FOR ATTACHING A TELEMATICS MODULE TO AN INTERNAL STRUCTURAL ELEMENT OF A MOTOR VEHICLE, TELEMATICS SYSTEM, AND VEHICLE COMPRISING SUCH A BRACKET

(30) Priorité: 11.06.2021 FR 2106178
(43) Date de publication de la demande: 17.04.2024
(73) Titulaire: Stellantis Auto SAS, 78300 Poissy (FR)
(72) Inventeur: SEREZAT, Laurent, 11510 TREILLES (FR); BOUEDO, Jean Pierre, 77176 SAVIGNY LE TEMPLE (FR); BEATRIX, Franck, 77240 CESSON (FR); FOURNIAT, Philippe, 75014 PARIS 14 (FR); DUBOIS, Olivier, 90360 PETITEFONTAINE (FR)
(74) Mandataire: ESIP
(86) Numéro de dépôt international: PCT/FR2022/050668
(87) Numéro de publication internationale: WO 2022/258891

(56) Documents cités:
- EP-A1- 3 431 341
- EP-A1- 3 431 341
- EP-A1- 3 431 342
- EP-A1- 3 431 342

## Description

Dans le secteur automobile, il est de plus en plus courant d'intégrer des fonctions de communication entre des équipements électroniques du véhicule et les équipements externes au véhicule. A cet effet, un module télémétrique est utilisé pour recevoir et traiter des signaux en provenant d'équipements externes ou inversement pour transmettre des signaux produits par des équipements électroniques du véhicule à des équipements externes au véhicule. Un tel module télématique est généralement positionné sous une antenne solidaire du pavillon (ou toit) du véhicule et est connecté à la dite antenne configurée pour recevoir des signaux d'équipements externes.

Le document D1 = EP3431341 décrit un système comprenant un module télématique couplé à un support facilitant, lors du montage du véhicule, la fixation du module au pavillon du véhicule. La liaison à la fois électrique et mécanique entre le module et le support reste toutefois délicate à réaliser. Par ailleurs, le module, positionné directement sous la tôle du pavillon a tendance à chauffer de façon anormale dans certaines conditions d'utilisation du véhicule. De plus, lors d'un choc sur le pavillon du véhicule, le module peut être endommagé et ne plus fonctionner correctement ; la possibilité de lancer un appel d'urgence n'est alors plus garantie. Egalement, l'antenne étant positionnée à l'extérieur du véhicule, elle peut être aisément vandalisée ou être endommagée lors d'un choc. Enfin, le montage du module sous le pavillon du véhicule impose à l'opérateur de montage des positions peu ergonomiques.

Le document EP3431342décrit un système télématique conforme au préambule de la revendication 1 permettant de fixer un module télématique sur un toit de véhicule.

La présente invention vise à pallier les inconvénients décrits ci-dessus des supports de fixation pour module télématique connus.

A cet effet, l'invention propose un système télématique avec les caractéristiques de la revendication 1.

Le support selon l'invention a une fonction mécanique de maintien uniquement, il n'intègre ainsi aucune fonction électrique ou électronique. L'assemblage entre le module télématique et le support est ainsi purement mécanique, plus simple donc qu'un assemblage combinant une partie mécanique et une partie électrique, comme c'est le cas dans D1 par exemple ; de plus, le moyen d'assemblage est configuré pour permettre l'assemblage du module télématique sur le support par un simple mouvement de glissement du module sur le support, au surplus un mouvement parfaitement guidé par les éléments d'assemblage ; le montage du module sur le support est ainsi grandement facilité.

L'invention concerne enfin un véhicule automobile comprenant un système télématique tel que décrit ci-dessus, le support du système télématique étant solidarisé à un élément de structure du véhicule automobile, notamment un élément de structure positionné sous une console du véhicule. Ainsi positionné à l'intérieur du véhicule, et notamment sous la console du véhicule, le système de fixation est protégé des chocs et du vandalisme.

D'autres caractéristiques et avantages de l'invention apparaîtront à la lecture de la description détaillée ci-dessous de modes de réalisation de l'invention, donnés à titre d'exemple uniquement, et en référence aux dessins annexés dans lesquels :
- [Fig. 1] la figure 1 présente une vue en perspective de dessus du support
- [Fig. 2] la figure 2 présente une vue en perspective de dessous du boîtier du module
- [Fig. 3] la figure 3 présente une vue de face du module de la figure 2 assemblé sur le support de la figure 1
- [Fig. 4] la figure 4 présente une vue de face d'une variante du module de la figure 2 assemblé sur une variante du support de la figure 1.

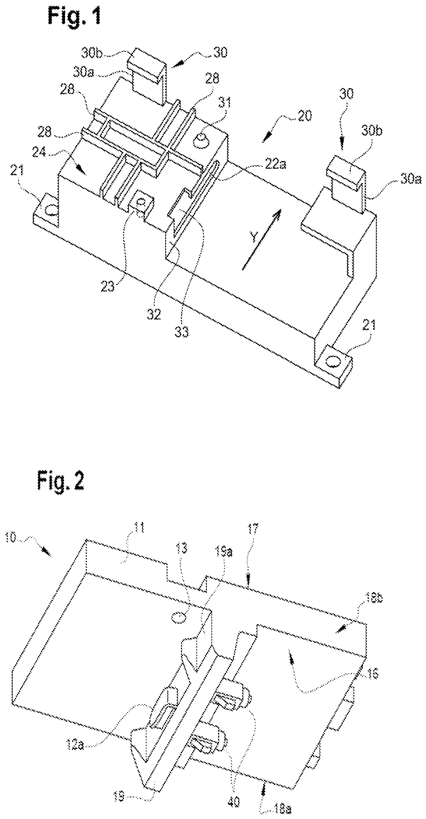

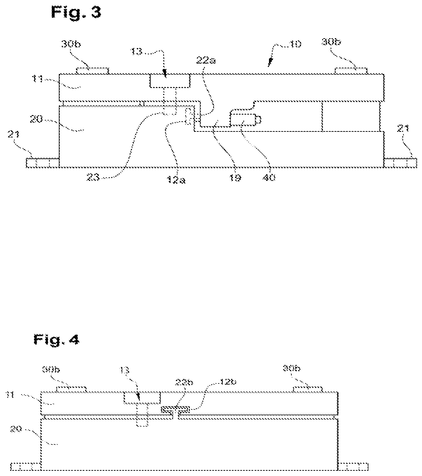

Sur les différentes figures, les éléments identiques ou similaires, sont référencés avec les mêmes repères. Les notions "dessus", "dessous", "latéral" sont définies en prenant comme référence la vue de la figure 3 où le module 10 est positionné au-dessus du support 20. La direction Y de coulissement est une direction perpendiculaire au plan de la figure 1.

L'invention concerne également un système télématique comprenant :
- un module télématique 10 comprenant un boîtier 11 dans lequel sont logés des moyens pour recevoir des signaux et au moins un composant électronique pour traiter lesdits signaux, et
- un support 20 tel que détaillé ci-dessous.

Le module télématique 10 comprend :
- un boîtier 11 comprenant un premier élément d'assemblage 12a, 12b et un premier élément de verrouillage 13 et
- des moyens pour recevoir des signaux et au moins un composant électronique pour traiter lesdits signaux logés dans le boîtier et non représentés sur les figures.

Le support 10 comprend notamment :
- un deuxième élément d'assemblage 22a, 22b configuré pour coopérer avec le premier élément d'assemblage 12a, 12b solidaire du boîtier du module télématique et
- un deuxième élément de verrouillage 23 configuré pour coopérer avec le premier élément de verrouillage 13 solidaire du boîtier du module télématique pour immobiliser le module télématique sur le support en une position d'assemblage.

Le deuxième élément d'assemblage est configuré pour coopérer avec le premier élément d'assemblage selon une configuration de type mâle-femelle pour guider un coulissement du boîtier 11 du module 10 en appui sur le support 20 selon une direction de coulissement Y sensiblement parallèle à une face principale 24 du support jusqu'à la position d'assemblage.

Les deux éléments d'assemblage s'étendent ici selon la direction de coulissement Y, assurant ainsi le guidage du mouvement de coulissement. Les deux éléments d'assemblage sont :
- pour l'un, une nervure 12a, 22b et,
- pour l'autre, une rainure 12b, 22a associée.

Dans le mode de réalisation représenté sur les figures 1 à 3, la nervure 12a est solidaire du module 10 et la rainure 22a est réalisée sur le support. Dans le mode de réalisation représenté sur la figure 4, la nervure 22b est solidaire du support et la rainure 12b est réalisée sur le boîtier. Egalement, dans les exemples représenté, la nervure 12a, 22b comprend une section en T : le corps du T est agencé pour coulisser dans la rainure et la tête du T empêche tout déplacement du module par rapport au support dans une direction autre que la direction de coulissement. Le coulissement est ainsi parfaitement guidé. Toute autre forme de section susceptible de réaliser la même fonction de guidage peut bien sûr être envisagée.

Dans les modes de réalisation représentés, les deux éléments de verrouillage 13, 23 sont un trou débouchant 13 et un trou taraudé 23 associé, l'un prévu sur le boîtier 11 du module 10 et l'autre prévu sur le support 20. Un vis, non représenté, permet de verrouiller le module sur le support.

Egalement, le support peut comprendre une pluralité de nervures d'appui 28 (figures 1 à 3) s'étendant depuis la face principale 24 du support ; une extrémité distale d'une nervure forme une surface d'appui pour une face de dessous 16 du boîtier du module lors du coulissement du module par rapport au support. Les nervures d'appui 28 limitent les surfaces de contact entre le module et le support, ce qui facilite le coulissement. Egalement, les nervures permettent la présence d'une lame d'air, ou une circulation d'air, selon la forme des nervures d'appui, entre le module et le support après assemblage, ce qui facilite le refroidissement des composants électroniques à l'intérieur du boîtier du module.

Le support comprend également au moins un élément de butée 30 agencé pour stopper le coulissement du module et du support l'un par rapport à l'autre en position d'assemblage ; un corps 30a de l'élément de butée s'étend depuis la face principale 24 du support selon une direction parallèle à une face latérale 18a du boîtier 11. Le corps 30a de l'élément de butée 30 est prolongé par une tête 30b faisant saillie selon une direction sensiblement parallèle à une face de dessus 17 du boîtier 11 ; la tête 30b empêche un déplacement du module selon une direction perpendiculaire au support. Dans les exemples représentés, deux éléments de butée 30 similaires sont représentés.

Le support 20 comprend au moins un picot 31 (fig. 1) s'étendant depuis la face principale 24 du support, picot sur lequel la face de dessous 16 du boîtier est en contact lorsque le dit boîtier est assemblé au support, une hauteur du dit picot étant ajustée de sorte que la face de dessus 17 du boîtier soit plaquée contre la tête 30b faisant saillie de l'élément de butée 30 lorsque le boîtier est assemblé au support. Ceci permet d'empêcher toute vibration du module sur le support, notamment lorsque le véhicule se déplace. En pratique, la hauteur du picot peut être choisie légèrement supérieure à une hauteur des nervures d'appui, et le picot peut être positionné à proximité du ou des éléments de butée. Ainsi, l'effet du picot est sensible à la fin du coulissement seulement, lorsque le module et le support sont en position d'assemblage. Egalement, une extrémité distale du picot peut être arrondie, pour faciliter le coulissement du module sur l'extrémité distale du picot.

Dans le mode de réalisation représenté sur la figure 4, le boîtier du module a une forme générale parallélépipédique, et présente une rainure 12b débouchant sur une face de dessous 16 du boîtier et sur une face latérale 18b du boîtier. Le support 20 a une forme générale présentant une face principale 24 sensiblement plane ; prévue pour coopérer avec la rainure 12b, une nervure 22b s'étend depuis la face principale du support.

Dans le mode de réalisation représenté sur les figures 1 à 3, le boîtier de forme générale parallélépipédique comprend une poutre 19 faisant saillie depuis la face de dessous 16 du boîtier ; la poutre comprend une paroi latérale 19a. Le support 20 comprend un épaulement 32 le long duquel la paroi latérale 19a de la poutre peut coulisser. L'un des éléments d'assemblage, en l'espère la nervure 12a, est solidaire de la paroi latérale 19a de la poutre 19 du module et l'autre des éléments d'assemblage, en l'espèce la rainure 22a, est prévue dans l'épaulement 32 du support. Une extrémité de la rainure 22a débouche également sur la face principale 24 du support, formant ainsi un espace de dégagement 33 facilitant le positionnement du module sur le boîtier puis l'engagement de la nervure 12a dans la rainure 22a.

Dans ce mode de réalisation, figures 1 à 3, des connecteurs 40 sont fixés sur la poutre 19 du module, sur une face latérale de la poutre opposée à la face latérale 19a en contact avec l'épaulement 32. Après assemblage du module sur le support, lesdits connecteurs se trouvent positionnés dans un espace protégé défini par une partie du support et une partie du boîtier module. Les connecteurs 40 sont utilisables pour la connexion du module 10 aux dispositifs électroniques du véhicule avec lesquels le module communique.

En synthèse, l'invention propose un nouveau support 20 de fixation d'un module télématique 10 sur un élément de structure d'un véhicule, qui apporte notamment les bénéfices techniques et économiques suivants :
- une facilité de montage,
- une protection des connexions de faisceaux électriques et / ou électroniques
- une possibilité de localiser le module télématique ailleurs que sous le pavillon du véhicule, par exemple sous une console du véhicule, pour limiter une éventuelle surchauffe du module et limiter les risques de casse en cas de choc ou de vandalisme.

### Nomenclature

10 module télématique
   11 boîtier
   1er élément d'assemblage
      12a nervure d'assemblage
      12b rainure d'assemblage
   13 1er élément de verrouillage (trou)
   16 face de dessous
   17 face de dessus
   18a, 18b faces latérales du boîtier
   19 poutre
      19a paroi latérale de la poutre
   40 connecteurs
20 support
   21 pattes de fixation
   2ème élément d'assemblage
      22a rainure d'assemblage
      22b nervure d'assemblage
   23 2ème élément de verrouillage (trou taraudé)
   24 face principale
   28 nervure d'appui
   30 éléments de butée
      30a corps
      30b tête faisant saillie
   31 picot
   32 épaulement
   33 espace de dégagement
Y direction de coulissement

## Revendications

1. Système télématique comprenant : - un module télématique (10) comprenant un boîtier (11) dans lequel sont logés des moyens pour recevoir des signaux et au moins un composant électronique pour traiter lesdits signaux, et un support (20) destiné à la fixation du module télématique (10) à un élément de structure d'un véhicule automobile,
module télématique (10) comprenant :
- un boîtier (11) comprenant un premier élément d'assemblage (12a, 12b) et un premier élément de verrouillage (13) et
- des moyens pour recevoir des signaux et au moins un composant électronique pour traiter lesdits signaux logés dans le boîtier,
support (20) comprenant :
- un deuxième élément d'assemblage (22a, 22b) configuré pour coopérer avec le premier élément d'assemblage solidaire du boîtier du module télématique et
- un deuxième élément de verrouillage (23) configuré pour coopérer avec le premier élément de verrouillage (13) solidaire du boîtier pour immobiliser le module télématique sur le support en une position d'assemblage,
le deuxième élément d'assemblage étant configuré pour coopérer avec le premier élément d'assemblage selon une configuration de type mâle-femelle pour guider un coulissement du module (10) en appui sur le support (20) selon une direction de coulissement (Y) sensiblement parallèle à une face principale (24) du support jusqu'à la position d'assemblage,
le support comprenant également au moins un élément de butée (30) agencé pour stopper le coulissement du module et du support l'un par rapport à l'autre en position d'assemblage,
l'élément de butée comprenant un corps (30a) s'étendant depuis la face principale (24) du support selon une direction parallèle à une face latérale (18a) du boîtier (11),
dans lequel le corps (30a) de l'élément de butée (30) est prolongé par une tête (30b) faisant saillie selon une direction sensiblement parallèle à une face de dessus (17) du boîtier (11), et
le système télématique étant **caractérisé en ce que** le support (20) comprend également au moins un picot (31) s'étendant depuis la face principale (24) du support, picot sur lequel la face de dessous (16) du boîtier est en contact lorsque le dit boîtier est assemblé au support, une hauteur du dit picot étant ajustée de sorte que la face de dessus (17) du boîtier soit plaquée contre la tête (30a) faisant saillie de l'élément de butée (30) lorsque le boîtier est assemblé au support.

2. Système télématique selon la revendication 1 dans lequel les deux éléments d'assemblage s'étendent selon la direction de coulissement et dans lequel les deux éléments d'assemblage sont :
- pour l'un, une nervure (12a, 22b), de préférence une nervure comprenant une section en T, et,
- pour l'autre, une rainure (12b, 22a) associée.

3. Système télématique selon l'une des revendications précédentes dans lequel les deux éléments de verrouillage sont un trou débouchant (13) et un trou taraudé (23) associé, l'un prévu sur le boîtier du module et l'autre prévu sur le support.

4. Système télématique selon l'une des revendications précédentes comprenant encore une pluralité de nervures d'appui (28) s'étendant depuis la face principale (24) du support, une extrémité distale d'une nervure d'appui formant une surface d'appui pour une face de dessous (16) du boîtier du module lors du coulissement du module par rapport au support.

5. Système télématique selon l'une des revendications précédentes, le boîtier de module comprenant une poutre (19) faisant saillie depuis la face de dessous (16) du boîtier, poutre comprenant une paroi latérale (19a), le support (20) étant adapté pour ledit boîtier en ce qu'il comprend un épaulement (32) le long duquel la paroi latérale (19a) de la poutre peut coulisser, l'un des éléments d'assemblage (12, *22)* étant solidaire de la paroi latérale (19a) de la poutre (19) du module et l'autre des éléments d'assemblage étant solidaire de l'épaulement (32) du support.

6. Véhicule automobile comprenant un système télématique selon l'une des revendications précédentes, le support (20) du système télématique étant solidarisé à un élément de structure du véhicule automobile, notamment un élément de structure positionné sous une console du véhicule.

## Patentansprüche

1. Telematiksystem, umfassend - ein Telematikmodul (10), das ein Gehäuse (11) umfasst, in dem Mittel zum Empfang von Signalen und mindestens eine elektronische Komponente zur Verarbeitung dieser Signale untergebracht sind, und einen Träger (20), der zur Befestigung des Telematikmoduls (10) bestimmt ist. an einem Strukturelement eines Kraftfahrzeugs,
Telematikmodul (10) umfassend:
- ein Gehäuse (11) umfassend ein erstes Montageelement (12a, 12b) und ein erstes Verriegelungselement (13) und
- Mittel zum Empfangen von Signalen und mindestens eine elektronische Komponente zur Verarbeitung dieser Signale, untergebracht im Gehäuse, Träger (20), umfassend:
- ein zweites Montageelement (22a, 22b), das dazu konfiguriert ist, mit dem am Gehäuse des Telematikmoduls befestigten ersten Montageelement zusammenzuwirken und
- ein zweites Verriegelungselement (23), das so konfiguriert ist, dass es mit dem am Gehäuse befestigten ersten Verriegelungselement (13) zusammenwirkt, um das Telematikmodul auf dem Träger in einer Montageposition zu fixieren,
wobei das zweite Montageelement so konfiguriert ist, dass es mit dem ersten Montageelement in einer männlich-weiblichen Konfiguration zusammenwirkt, um das Gleiten des Moduls (10), das auf dem Träger (20) ruht, in einer Gleitrichtung (Y) im Wesentlichen parallel zu einer Hauptfläche zu führen. (24) des Trägers bis zur Montageposition,
wobei der Träger außerdem mindestens ein Anschlagelement (30) umfasst, das so angeordnet ist, dass es das Verschieben des Moduls und des Trägers relativ zueinander in der Montageposition stoppt, wobei das Anschlagelement einen Körper (30a) umfasst, der sich von der Hauptfläche (24) erstreckt ) des Trägers in einer Richtung parallel zu einer Seitenfläche (18a) des Gehäuses (11),
wobei der Körper (30a) des Anschlagelements (30) durch einen Kopf (30b) verlängert ist, der in einer Richtung im Wesentlichen parallel zu einer Oberseite (17) des Gehäuses (11) vorsteht, und das Telematiksystem **dadurch gekennzeichnet** ist Der Träger (20) umfasst außerdem mindestens einen Stift (31), der sich von der Hauptfläche (24) des Trägers erstreckt und mit dem die Unterseite (16) des Gehäuses in Kontakt steht, wenn das Gehäuse nach oben zeigt an der Halterung montiert, wobei eine Höhe des Stifts so eingestellt ist, dass die Oberseite (17) des Gehäuses gegen den Kopf (30a) gedrückt wird, der von dem Anschlagelement (30) vorsteht, wenn das Gehäuse an der Halterung montiert wird.

2. Telematiksystem nach Anspruch 1, bei dem sich die beiden Montageelemente in Schieberichtung erstrecken und bei dem die beiden Montageelemente sind:
- zum einen eine Rippe (12a, 22b), vorzugsweise eine Rippe mit einem T-förmigen Abschnitt, und,
- zum anderen eine zugehörige Nut (12b, 22a).

3. Telematiksystem nach einem der vorhergehenden Ansprüche, bei dem die beiden Verriegelungselemente ein Durchgangsloch (13) und ein zugehöriges Gewindeloch (23) sind, wobei eines am Gehäuse des Moduls und das andere am Träger vorgesehen ist.

4. Telematiksystem nach einem der vorhergehenden Ansprüche, das weiterhin mehrere Stützrippen (28) umfasst, die sich von der Hauptfläche (24) der Stütze erstrecken, wobei ein distales Ende einer Stützrippe eine Stützfläche für eine Unterseite (16) bildet ) des Modulgehäuses, wenn das Modul relativ zur Halterung verschiebt.

5. Telematiksystem nach einem der vorhergehenden Ansprüche, wobei das Modulgehäuse einen von der Unterseite (16) des Gehäuses abstehenden Balken (19) aufweist, wobei der Balken eine Seitenwand (19a) aufweist und der Träger (20) dazu geeignet ist Gehäuse **dadurch gekennzeichnet, dass** es eine Schulter (32) umfasst, entlang der die Seitenwand (19a) des Trägers gleiten kann, wobei eines der Montageelemente (12, 22) fest mit der Seitenwand verbunden ist (19a) des Balkens (19) des Moduls und das andere der Montageelemente fest mit der Schulter (32) des Trägers verbunden ist.

6. Kraftfahrzeug mit einem Telematiksystem nach einem der vorhergehenden Ansprüche, wobei der Träger (20) des Telematiksystems an einem Strukturelement des Kraftfahrzeugs, insbesondere einem unter einer Konsole des Fahrzeugs positionierten Strukturelement, befestigt ist.

## Claims

1. Telematics system comprising - a telematics module (10) comprising a housing (11) in which are housed means for receiving signals and at least one electronic component for processing said signals, and a support (20) intended for fixing the telematics module (10) to a structural element of a motor vehicle,
telematics module (10) comprising:
- a housing (11) comprising a first assembly element (12a, 12b) and a first locking element (13) and
- means for receiving signals and at least one electronic component for processing said signals housed in the housing,
support (20) comprising:
- a second assembly element (22a, 22b) configured to cooperate with the first assembly element secured to the housing of the telematics module and
- a second locking element (23) configured to cooperate with the first locking element (13) secured to the housing to immobilize the telematics module on the support in an assembly position,
the second assembly element being configured to cooperate with the first assembly element according to a male-female type configuration to guide a sliding of the module (10) resting on the support (20) in a sliding direction (Y) substantially parallel to a main face (24) of the support to the assembly position,
the support also comprising at least one stop element (30) arranged to stop the sliding of the module and the support relative to each other in the assembly position, the stop element comprising a body (30a) extending from the main face (24) of the support in a direction parallel to a lateral face (18a) of the housing (11),
in which the body (30a) of the stop element (30) is extended by a head (30b) projecting in a direction substantially parallel to a top face (17) of the housing (11), and the telematic system being **characterized in that** the support (20) also comprises at least one pin (31) extending from the main face (24) of the support, pin on which the bottom face (16) of the housing is in contact when said housing is assembled to the support, a height of said pin being adjusted so that the top face (17) of the housing is pressed against the head (30a) projecting from the stop element (30) when the housing is assembled to the support.

2. Telematics system according to claim 1 wherein the two assembly elements extend in the sliding direction and wherein the two assembly elements are:
- for one, a rib (12a, 22b), preferably a rib comprising a T-section, and,
- for the other, an associated groove (12b, 22a).

3. Telematics system according to one of the preceding claims, in which the two locking elements are a through hole (13) and an associated tapped hole (23), one provided on the module housing and the other provided on the support.

4. Telematics system according to one of the preceding claims, further comprising a plurality of support ribs (28) extending from the main face (24) of the support, a distal end of a support rib forming a support surface for a bottom face (16) of the module housing when the module slides relative to the support.

5. Telematics system according to one of the preceding claims, the module housing comprising a beam (19) projecting from the bottom face (16) of the housing, the beam comprising a side wall (19a), the support (20) being adapted for said housing in that it comprises a shoulder (32) along which the side wall (19a) of the beam can slide, one of the assembly elements (12, 22) being integral with the side wall (19a) of the beam (19) of the module and the other of the assembly elements being integral with the shoulder (32) of the support.

6. Motor vehicle comprising a telematics system according to one of the preceding claims, the support (20) of the telematics system being secured to a structural element of the motor vehicle, in particular a structural element positioned under a console of the vehicle.
